(19) **Europäisches Patentamt**
**European Patent Office**
**Office européen des brevets**

(11) **EP 2 296 971 B1**

(12) **FASCICULE DE BREVET EUROPEEN**

(45) Date de publication et mention
de la délivrance du brevet:
**09.05.2012 Bulletin 2012/19**

(51) Int Cl.:
***B64D 31/04*** *(2006.01)* ***B64D 31/02*** *(2006.01)*

(21) Numéro de dépôt: **09784264.5**

(86) Numéro de dépôt international:
**PCT/FR2009/000857**

(22) Date de dépôt: **10.07.2009**

(87) Numéro de publication internationale:
**WO 2010/007249 (21.01.2010 Gazette 2010/03)**

(54) **DISPOSITIF ET PROCEDE POUR LA DETERMINATION DE LA POSITION D'UNE MANETTE DES GAZ DANS UN AERONEF**

VORRICHTUNG UND VERFAHREN ZUR BESTIMMUNG DER POSITION EINES DROSSELHEBELS IN EINEM FLUGZEUG

DEVICE AND METHOD FOR DETERMINING THE POSITION OF A THROTTLE LEVER IN AN AIRCRAFT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **17.07.2008 FR 0804066**

(43) Date de publication de la demande:
**23.03.2011 Bulletin 2011/12**

(73) Titulaire: **Airbus Operations**
**31060 Toulouse (FR)**

(72) Inventeurs:
• **BELKADI, Jean-François**
**F-31000 Toulouse (FR)**
• **AMBROISE, Richard**
**F-31330 Merville (FR)**

(74) Mandataire: **Hartmann, Jean-Luc**
**Santarelli**
**Immeuble Innopolis A, BP 388**
**31314 Labège Cedex (FR)**

(56) Documents cités:
**US-A- 4 567 786 US-A- 5 125 602**
**US-A- 5 488 824**

## Description

La présente invention concerne un dispositif et un procédé pour la détermination de la position d'une manette des gaz dans un aéronef.

Dans un aéronef utilisant des commandes de vol électriques, le contrôle de la poussée de chaque moteur est assuré par le pilote en actionnant une manette des gaz correspondante. D'autres fonctions sont également commandées à partir de cette manette des gaz. Il est donc important de déterminer la position de cette manette pour le pilotage de l'aéronef.

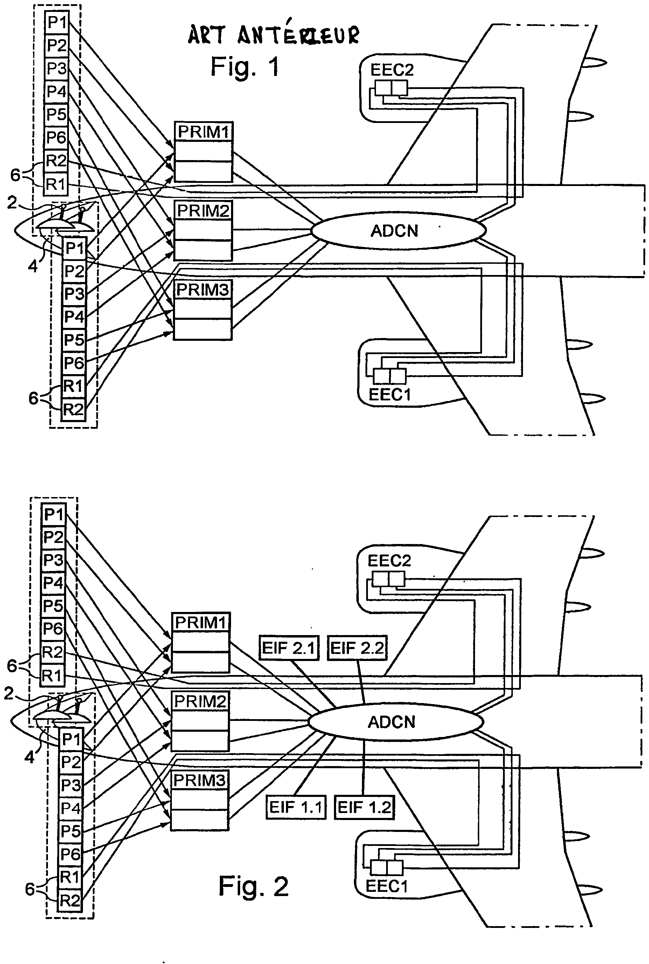

La figure 1 montre une architecture connue de l'art antérieur d'un dispositif permettant de déterminer la position d'une manette des gaz d'un aéronef bimoteur et de transmettre l'information à un calculateur de contrôle moteur correspondant. Dans l'exemple de réalisation représenté sur la figure 1, l'aéronef comporte deux moteurs M1 et M2 et deux manettes des gaz 2 sont disposées dans le cockpit 4 d'aéronef.

À chaque manette des gaz 2, sont associés des capteurs de position. Il y a tout d'abord six potentiomètres P1 à P6 et ensuite deux synchro-trigonomètres 6. Les potentiomètres de chaque manette des gaz 2 sont reliés deux à deux à un calculateur primaire de commande de vol. On a ainsi trois calculateurs primaires de commande de vol PRIM1 à PRIM3, chacun de ces calculateurs recevant les signaux de deux potentiomètres de chacune des manettes des gaz 2. Les informations acquises par ces calculateurs sont ensuite communiquées à un réseau numérique de l'aéronef, appelé ADCN, afin de les rendre accessibles à un calculateur de contrôle moteur, appelé EEC. Comme dans la forme de réalisation prévue sur la figure 1 il y a deux moteurs, il y a deux calculateurs de contrôle moteur, EEC1 et EEC2. Les synchro-trigonomètres 6 sont quant à eux, dans une architecture classique de l'art antérieur, reliés directement à un calculateur de contrôle moteur.

Le document US4567786 montre un autre exemple d'architecture avec toutes les caractéristiques techniques du préambule des revendications 1 et 7.

La présente invention a pour but de fournir une nouvelle architecture pour permettre la détermination de la position d'une manette des gaz présentant des avantages par rapport à l'architecture présentée ci-dessus.

Un but de la présente invention est ainsi de diminuer la masse du dispositif. En effet, l'utilisation de synchro-trigonomètres implique un poids important pour la réalisation de la fonction à remplir. Tout d'abord, un synchro-trigonomètre est un capteur qui est connecté par l'intermédiaire de six fils. Comme chaque capteur est relié à un calculateur de contrôle moteur EEC et compte tenu de l'éloignement de ces calculateurs par rapport au cockpit 4 (et donc à la manette des gaz 2 correspondante), le poids du câblage est important. Ensuite, un synchro-trigonomètre est un capteur relativement lourd car il utilise une technologie avec des bobines et un noyau magnétique.

Un autre but de la présente invention est d'améliorer la fiabilité du calcul de la position de la manette des gaz. Dans une architecture telle celle présentée plus haut, lorsque les deux synchro-trigonomètres d'une même manette des gaz donnent ensemble une position erronée, le calculateur de contrôle moteur EEC correspondant calcule alors une position erronée et la poussée commandée n'est de ce fait pas celle souhaitée par le pilote.

Un autre but de la présente invention est de simplifier la technologie des capteurs et l'interface. Lorsque des synchro-trigonomètres sont utilisés, il convient d'alimenter ces capteurs avec deux fils au moyen d'une tension sinusoïdale. Le calculateur de contrôle moteur EEC correspondant reçoit de la part du synchro-trigonomètre un signal représentatif du cosinus de l'angle mesuré sur deux fils par le capteur et un signal représentatif du sinus de cet angle mesuré sur deux autres fils. Le calculateur fait ensuite le rapport des signaux reçus afin de déterminer la tangente de l'angle mesuré et par utilisation de la fonction arctangente obtient enfin la valeur de l'angle mesuré. Comme il ressort de ce qui précède, l'interface utilisée est complexe et l'utilisation de cette technologie diminue la robustesse de l'ensemble du système.

Un autre but de la présente invention est également de permettre de simplifier l'architecture d'une manette des gaz. Comme indiqué plus haut, d'autres capteurs sont présents dans une manette des gaz. Le fait d'utiliser des technologies différentes pour ces divers capteurs rend l'ensemble complexe.

Un autre but de la présente invention est également de rendre le dispositif mis en oeuvre pour la détermination de la position d'une manette des gaz moins coûteux.

À cet effet, la présente invention propose un dispositif pour la détermination de la position d'une manette des gaz dans un aéronef, comportant d'une part des capteurs de position reliés chacun à un calculateur dit calculateur de commande de vol primaire et d'autre part des capteurs de position reliés chacun à un calculateur dit calculateur de contrôle moteur.

Selon la présente invention, les capteurs de position sont répartis en au moins trois groupes de capteurs, et le dispositif comporte au moins un calculateur, dit calculateur d'interface, présentant au moins une entrée pour recevoir des informations de mesure émises par les calculateurs reliés aux capteurs de position ainsi qu'au moins une sortie vers le calculateur de contrôle moteur.

Une telle architecture permet l'acquisition des signaux de mesure des capteurs mesurant la position de la manette des gaz par des calculateurs différents. Ces calculateurs, à partir des signaux reçus, donnent des informations de mesure correspondant à des valeurs de position de la manette. Ces informations de mesures, ou valeurs de position, peuvent ensuite être transmises, sous forme d'informations numériques, par les calculateurs (d'une part les calculateurs dits de commande de vol primaires et d'autre part les calculateurs dits de contrôle moteur) à un ou plusieurs calculateurs (dits calculateurs d'interface) par l'intermédiaire d'un réseau -numérique- présent généralement dans un aéronef. Le (ou les) calculateur(s) en réception de l'ensemble des valeurs de position peuvent alors effectuer le calcul de la valeur de position de la manette des gaz.

Avec une telle architecture, il n'est plus nécessaire d'utiliser des capteurs de type synchro-trigonomètres et on peut n'utiliser que des capteurs et des interfaces plus simples en limitant également le nombre de fils de liaison nécessaires.

Pour simplifier cette architecture, il peut être prévu que les calculateurs d'interface soient (tous ou certains d'entre eux) intégrés dans les calculateurs de commande de vol et/ou dans les calculateurs de contrôle moteur.

Pour une plus grande fiabilité du dispositif, les capteurs de position sont avantageusement répartis en des groupes de capteurs n'ayant pas de panne simple commune. On considère qu'une panne d'un capteur est une panne simple lorsqu'il s'agit d'une panne élémentaire qui entraîne une défaillance du système ou qui affecte l'information délivrée par le capteur. Après réparation du composant ayant provoqué une telle panne, le capteur revient dans un état de fonctionnement correct.

Dans une forme de réalisation de la présente invention, il est prévu que les capteurs de position reliés à un calculateur de contrôle moteur soient choisis par exemple dans l'ensemble des capteurs contenant les rhéostats, les capteurs numériques de type codeur incrémental et les capteurs analogiques de type potentiomètre. Les capteurs de position reliés à un calculateur de commande de vol primaire sont quant à eux par exemple des potentiomètres.

Une forme de réalisation préférée d'un dispositif selon l'invention comporte deux groupes de trois potentiomètres et un groupe de deux rhéostats, les potentiomètres étant de préférence chacun reliés à un calculateur de commande de vol primaire, et les rhéostats étant chacun reliés à un calculateur de contrôle moteur.

Dans un souci de fiabilité pour augmenter la sécurité du dispositif selon la présente invention, il est par exemple prévu que chaque calculateur relié à un capteur de position comporte au moins deux canaux, et qu'à chaque canal d'un calculateur de commande de vol primaire et d'un calculateur de contrôle moteur dudit dispositif est associé un seul capteur de position, et inversement.

La présente invention concerne également un procédé de détermination de la position d'une manette des gaz d'un aéronef selon lequel des capteurs de position mesurent la position angulaire de la manette des gaz.

Selon la présente invention, ce procédé comporte les étapes suivantes :

- acquisition des signaux en provenance des capteurs par plusieurs calculateurs distincts,
- transmission par lesdits calculateurs sous forme numérique de valeurs de position, dites valeurs de position de capteurs, déterminées à partir des mesures effectuées par les capteurs de position, à au moins un calculateur, dit calculateur d'interface,
- calcul par chaque calculateur d'interface d'une valeur de position de la manette des gaz, et
- transmission de la valeur de position calculée par chaque calculateur d'interface à un calculateur de contrôle moteur correspondant.

Il s'agit ici d'un procédé pour la mise en oeuvre du dispositif décrit plus haut. Dans un tel procédé, le calcul par au moins un calculateur d'interface comporte de préférence les étapes suivantes :

- calcul d'une valeur de position, dite valeur de position de groupe, pour chaque groupe de capteurs à partir des valeurs de position correspondant à chaque capteur du groupe, puis
- calcul d'une valeur de position pour la manette des gaz en fonction des valeurs de position de groupes.

Concernant ces calculs, ils sont avantageusement réalisés à partir de valeurs ou de résultats en accord avec d'autres valeurs ou résultats, c'est-à-dire avec des valeurs ou des résultats dont la distance relative est inférieure à un seuil.

Enfin, la présente invention concerne également un aéronef, caractérisé en ce qu'il comporte une manette des gaz et un dispositif pour la détermination de la position de ladite manette des gaz tel que décrit ci-dessus.

Des détails et avantages de la présente invention ressortiront mieux de la description qui suit, faite en référence aux dessins schématiques annexés sur lesquels :

la figure 1 représente schématiquement une architecture d'un dispositif de détermination de la position d'une manette des gaz d'un aéronef de l'art antérieur,
la figure 2 est une vue schématique correspondant à la vue de la figure 1 montrant schématiquement en vue de dessus une partie avant d'un aéronef ainsi qu'un dispositif de détermination de la position d'une manette des gaz selon la présente invention,

la figure 3 montre schématiquement une manette des gaz comportant des capteurs de position rassemblés en trois groupes,

la figure 4 montre schématiquement une manette des gaz comportant des capteurs de position rassemblés en quatre groupes,

la figure 5 montre schématiquement une manette des gaz comportant des capteurs de position rassemblés en cinq groupes,

la figure 6 montre une architecture de communication pour un dispositif de détermination de la position d'une manette des gaz selon la présente invention, et

la figure 7 montre un organigramme illustrant un algorithme pour la détermination de la position de la manette des gaz dans un dispositif selon la présente invention.

Les éléments de la figure 2 similaires à des éléments déjà représentés sur la figure 1 reprennent les mêmes références que celles utilisées sur la figure 1.

Ainsi, on retrouve sur la figure 2 une partie avant d'un aéronef avec un cockpit 4 dans lequel se trouvent des manettes des gaz 2. Dans le cas présent, l'aéronef représenté comporte deux moteurs M1 et M2 et il y a deux manettes des gaz 2 dans le cockpit 4.

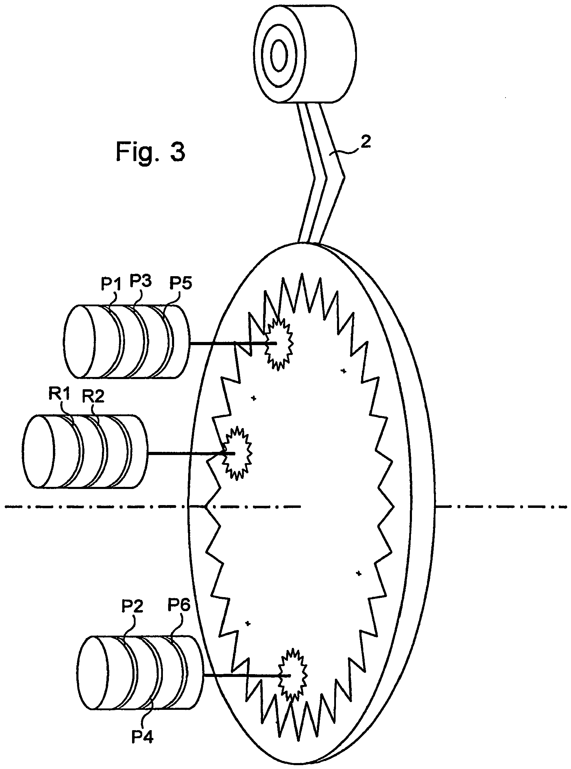

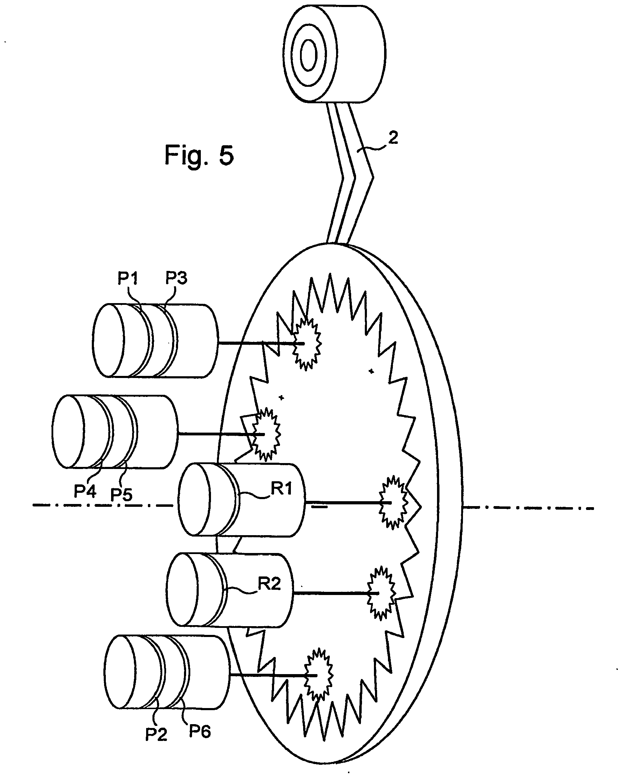

Des capteurs sont intégrés à chaque manette des gaz 2. De même que sur la figure 1, ces capteurs sont symbolisés à l'extérieur des manettes des gaz 2 pour des raisons de clarté des figures 1 et 2 mais, comme suggéré notamment sur les figures 3 à 5, ces capteurs sont disposés à l'intérieur du mécanisme de la manette des gaz correspondante. Comme pour l'architecture de l'art antérieur représentée sur la figure 1, parmi les capteurs utilisés, on retrouve pour chaque manette des gaz 2, dans la présente forme de réalisation, six potentiomètres P1 à P6. Dans cette forme de réalisation, deux rhéostats R1 et R2 sont également prévus pour chaque manette des gaz 2.

Chaque capteur, potentiomètre ou rhéostat, fournit un signal électrique représentatif de la position de la manette des gaz 2 correspondante. Ces signaux électriques sont acquis par des calculateurs distincts -comme décrit plus en détails ci-après-. Lesdits calculateurs transmettent alors, sous forme d'informations numériques, les valeurs de position, appelées valeurs de position de capteur (car correspondant à une mesure faite par un capteur), à un ou plusieurs (autres) calculateurs par l'intermédiaire d'un réseau numérique de communication. Un tel réseau de communication est déjà habituellement présent dans un aéronef du type de ceux concernés par la présente invention. Tous les calculateurs, ou tout du moins tous ceux concernés ici par la détermination de la position d'une manette des gaz 2, sont connectés à ce réseau de communication. Il s'agit ici de préférence du réseau ADCN évoqué au préambule en référence à la figure 1.

De préférence, les capteurs de position, potentiomètres et rhéostats, sont disposés en au moins trois groupes. On place dans un même groupe des capteurs pour lesquels une panne simple commune n'est pas préjudiciable au fonctionnement du système. Par contre aucune panne simple n'est commune à la moitié ou plus des groupes de capteurs.

Les figures 3 à 5 illustrent le regroupement possible des potentiomètres P1 à P6 et des rhéostats R1 et R2 dans une manette des gaz 2. Chacun des capteurs mesure l'angle correspondant à la position de la manette des gaz 2 à laquelle le capteur est associé.

Selon la forme de réalisation de la figure 3, un premier groupe de capteurs rassemble les potentiomètres P1, P3 et P5 (potentiomètres "impairs"), un deuxième groupe rassemble les potentiomètres P2, P4 et P6 (potentiomètres "pairs") tandis que le troisième groupe rassemble les deux rhéostats R1 et R2.

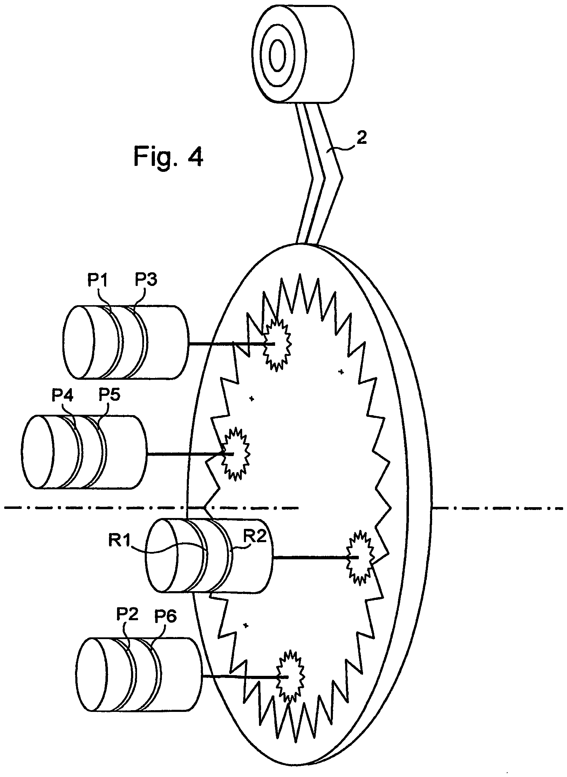

Selon la seconde forme de réalisation montrée sur la figure 4, on retrouve un groupe de capteurs rassemblant les rhéostats R1 et R2 tandis que les potentiomètres sont regroupés de la manière suivante P1 avec P3, P4 avec P5 et P2 avec P6.

Enfin la troisième forme de réalisation reprend les mêmes groupes de potentiomètres que la seconde forme de réalisation mais ici, par rapport à cette seconde forme de réalisation, chaque rhéostat est dans un groupe distinct.

Ces regroupements de capteurs sont donnés à titre d'exemples illustratifs non limitatifs. En effet, d'autres regroupements sont envisageables. En outre, le nombre et la nature des capteurs pourraient différer par rapport aux formes de réalisation représentées sur les dessins annexés.

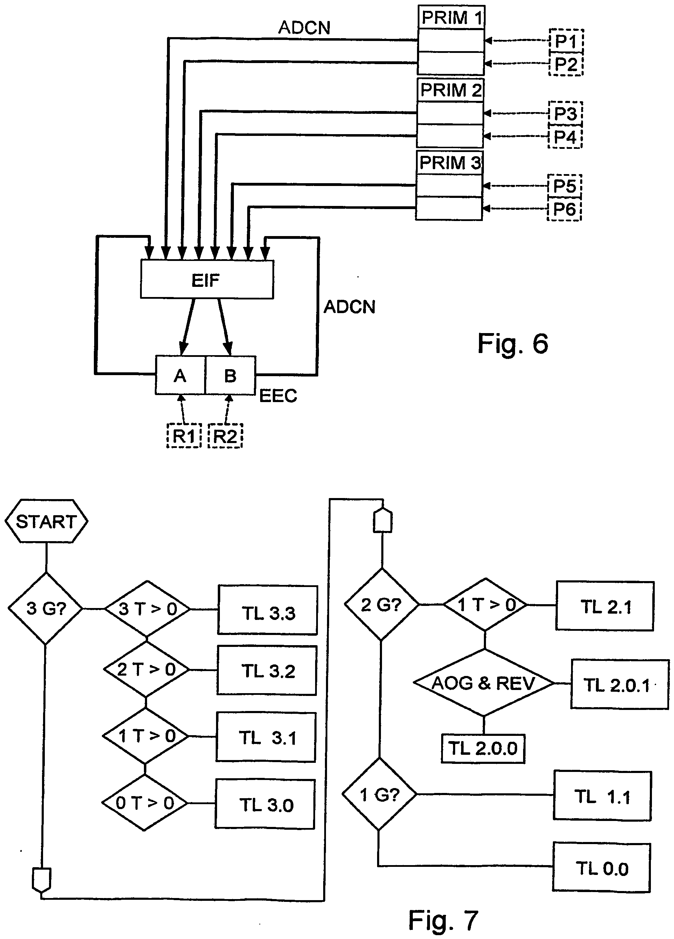

Dans la forme de réalisation de la figure 2, correspondant également à la figure 6, on prévoit que les signaux fournis par les potentiomètres P1 et P2 sont transmis à un premier calculateur primaire de commande de vol PRIM1. De même, les signaux fournis respectivement par les potentiomètres P3, P4 et P5, P6 sont transmis respectivement à un second calculateur primaire de commande de vol PRIM2 et à un troisième calculateur primaire de commande de vol PRIM3. Les signaux fournis par les rhéostats R1 et R2 sont transmis à un calculateur de contrôle moteur, appelé EEC. Les valeurs de position calculées à partir des signaux en provenance des capteurs d'une manette des gaz 2 sont transmis au calculateur de contrôle moteur du moteur M1 : ce calculateur de contrôle moteur porte ici la référence EEC1. Les signaux de l'autre manette des gaz 2 sont transmis au calculateur de contrôle moteur du moteur M2 : ce calculateur de contrôle moteur porte ici la référence EEC2.

Dans cette forme de réalisation, l'architecture de l'aéronef bimoteur considéré comprend donc trois calculateurs primaires de commande de vol (PRIM) et également un calculateur de contrôle moteur (EEC) par moteur. Chacun de ces calculateurs (PRIM et EEC) possède deux canaux, chaque canal correspondant à un "demi-calculateur". Ainsi, dans la forme de réalisation considérée ici, chaque capteur (rhéostat ou potentiomètre) est connecté à un canal d'un calculateur. Dans le présent exemple de réalisation, un capteur mesurant la position de la manette des gaz 2 de chaque moteur est connecté à un canal, ou demi-calculateur, d'un calculateur ; les potentiomètres sont chacun connectés à un canal d'un calculateur primaire de commande de vol (PRIM) tandis que chaque rhéostat est connecté à un canal d'un calculateur de contrôle moteur (EEC). Les potentiomètres sont connectés aux calculateurs primaires de commande de vol à chaque fois avec quatre fils tandis que les rhéostats sont connectés aux calculateurs de contrôle moteur à chaque fois avec deux fils.

La présente invention prévoit aussi, dans la forme de réalisation préférée décrite ici en relation avec un aéronef bimoteur, la présence de quatre calculateurs d'interface, appelés EIF, deux calculateurs d'interface étant prévus ici pour chaque moteur.

Comme illustré sur la figure 6, les calculateurs PRIM1, PRIM2, PRIM3 et EEC1 envoient à destination d'un calculateur d'interface EIF, par l'intermédiaire du réseau ADCN, l'ensemble des informations de mesure de la position de la manette des gaz 2 du moteur M1. Comme mentionné plus haut, deux calculateurs d'interface sont prévus pour chaque moteur. L'ensemble des informations de mesure précité, c'est-à-dire l'ensemble des valeurs de position de capteur, est ainsi envoyé aux deux calculateurs d'interface correspondant au moteur M1 et appelés EIF1.1 et EIF1.2.

De même, les calculateurs PRIM1, PRIM2, PRIM3 et EEC2 envoient à destination des deux calculateurs d'interface correspondant au moteur M2, par l'intermédiaire du réseau ADCN, l'ensemble des informations de mesure de la position de la manette des gaz 2 du moteur M2. L'ensemble des informations de mesure précité est ainsi envoyé aux deux calculateurs d'interface correspondant au moteur M2 et appelés EIF2.1 et EIF2.2.

Ces calculateurs d'interface EIF1.1, EIF1.2, EIF2.1 et EIF2.2 effectuent chacun le calcul de la position de la manette des gaz 2 dont ils ont la charge et cette position calculée est donnée à chacun des deux canaux du calculateur de contrôle moteur EEC correspondant qui se chargent ensuite de la commande de la poussée du moteur associé.

Sur la figure 2, les calculateurs d'interfaces EIF sont représentés comme étant des calculateurs distincts des calculateurs de contrôle moteur EEC et des calculateurs primaires de commande de vol (PRIM). On ne sortirait pas du cadre de l'invention si ces calculateurs d'interface étaient intégrés dans ces autres calculateurs PRIM ou EEC.

Les résultats des calculs concernant les positions des manettes des gaz 2 sont également transmis à tout le réseau numérique ADCN et sont donc à la disposition non seulement du contrôle moteur mais de toutes les fonctions qui en ont besoin, comme par exemple les commandes de vol.

Le principe du calcul de la position, dans un mode de réalisation préféré proposé par la présente invention, est par exemple basé sur la notion de valeurs dites "en accord". Conformément à ce principe, une valeur de position de la manette mesurée par un capteur ou résultant du calcul d'une valeur de position au sein d'un groupe de capteurs est considérée "en accord" avec celle donnée par un autre capteur ou résultant du calcul d'une valeur de position au sein d'un autre groupe de capteurs lorsque la distance, ou différence, entre ces valeurs est inférieure à un seuil. Ce dernier est déterminé en fonction de la précision et de la résolution des capteurs, de la précision de la mécanique associée, des connections électriques et de l'électronique qui effectue l'acquisition des signaux électriques des capteurs, potentiomètres ou rhéostats.

Au sein d'un même groupe de capteurs, les valeurs de position des capteurs sont comparées deux à deux. Par ces comparaisons, on détermine dans ce groupe un (ou plusieurs) sous-groupe(s) de valeurs de position de capteur qui sont en accord les unes avec les autres.

Le calcul d'une valeur de position au sein d'un groupe de capteurs est par exemple la moyenne des valeurs de position du plus grand sous-groupe de valeurs en accord. La valeur de position calculée ici est alors appelée valeur de position de groupe car elle correspond à une valeur calculée à l'aide des mesures réalisées par un groupe de capteurs.

La valeur de la position globale d'une manette des gaz 2 peut ensuite être calculée à partir des valeurs de position de chaque groupe selon le principe énoncé précédemment : les valeurs de position de groupe calculées pour chaque groupe de capteurs sont comparées deux à deux et le résultat donnant la valeur de la position globale de la manette est obtenu en faisant la moyenne des valeurs de position des groupes de capteurs contenus dans le plus grand sur-groupe de groupes dont les valeurs de position sont en accord.

Dans le mode de réalisation décrit en référence aux dessins schématiques annexés, tous les calculateurs d'interface EIF1.1, EIF1.2, EIF2.1 et EIF2.2 contiennent le même algorithme de calcul. Les calculateurs d'interface correspondant au moteur M1 utilisent les informations de position de la manette des gaz 2 correspondant au moteur M1 tandis que les calculateurs d'interface correspondant au moteur M2 utilisent les informations de position de la manette des gaz 2 correspondant au moteur M2.

Chaque calculateur (PRIM ou EEC) indique aux calculateurs d'interface, pour chaque capteur dont il fait l'acquisition, la valeur de position de capteur déterminée correspondant à la valeur mesurée par ce capteur et à sa validité (peut correspondre à une information binaire de type 0 ou 1 pour indiquer si la valeur est Valide ou Invalide).

Le calcul de la position d'une manette des gaz 2 est par exemple réalisé de la manière décrite ci-après et illustrée partiellement par l'organigramme de la figure 7. Ce calcul est un exemple de réalisation basé sur l'architecture décrite plus haut pour un aéronef bimoteur, pour six potentiomètres et deux rhéostats répartis en trois groupes de capteurs par manette des gaz 2.

Comme suggéré plus haut, une première étape, non illustrée sur la figure 7, consiste à calculer une valeur de position de groupe pour un groupe de capteurs. On suppose ici, pour être en cohérence avec la description qui précède, qu'un groupe de capteurs comporte au plus trois capteurs C1, C2 et C3. On appellera c1, c2 et c3 les valeurs de position de capteur correspondant aux mesures réalisées respectivement par les capteurs C1, C2 et C3.

1. Les tests suivants sont réalisés :

Test 1 : | c1-c2 | < T
Test 2 : | c1-c3 | < T
Test 3 : | c2-c3 | < T

où T est la tolérance, ou seuil, évoquée plus haut et qui est à calculer en fonction notamment des erreurs de mesure liées à l'architecture du système.

1.1 Si les trois tests sont positifs, c'est-à-dire que les valeurs absolues des différences calculées sont inférieures à la tolérance T, on détermine alors comme valeur de position pour le groupe des trois capteurs la moyenne des valeurs de position de capteur correspondant aux mesures faites par les trois capteurs. Si G est le nom du groupe, g3.3 est la valeur de la position de groupe de la manette des gaz correspondant au groupe G déterminée avec trois valeurs de position de capteur et trois tests positifs :

$$g3.3 = ( c1 + c2 + c3 ) / 3$$

1.2 Si seulement deux tests sont positifs, on détermine alors comme valeur de position pour le groupe des trois capteurs la valeur de position de capteur du capteur en commun aux deux tests positifs. g3.2 est la valeur de position de groupe correspondant au groupe G déterminée avec trois valeurs de position de capteur et deux tests positifs :

$$g3.2 = ci, \text{ avec } i = 1 \text{ ou } 2 \text{ ou } 3$$

1.3 Si seulement un test est positif, la valeur de position de groupe pour le groupe G est la moyenne des deux valeurs de position de capteur des capteurs pour lesquels le test a été positif. g3.1 est la valeur de position de groupe correspondant au groupe G déterminée avec trois valeurs de position de capteur valides et un seul test positif :

$$g3.1 = ( ci + cj ) / 2, \text{ avec } ( i, j ) = ( 1, 2 ), ( 1, 3 ) \text{ ou } ( 2, 3 )$$

Dans ce cas, le troisième capteur est déclaré en panne.

1.4 Dans le cas où aucun test n'est positif, le groupe est déclaré invalide et les trois capteurs du groupe G sont déclarés comme étant en panne.

2 Lorsque le groupe ne comporte que deux capteurs, un seul test est réalisé :

Test 1 : I c1-c2 I < T, étant supposé ici que les deux capteurs du groupe sont les capteurs C1 et C2.

La tolérance T (qui peut être appelée aussi seuil) reste la même pour un même groupe G de capteurs mais elle peut changer pour un autre groupe de capteurs.

2.1 Si le test est positif, de manière analogue à ce qui a été décrit plus haut, la valeur de position de groupe pour le groupe correspondant est la moyenne des valeurs de position de capteur fournies par les deux capteurs. On a ainsi :

$$g2.1 = ( c1 + c2 ) / 2$$

2.2 Si le test est négatif, les valeurs de position de capteur fournies à partir des mesures faites par les capteurs C1 et C2 sont comparées avec la position globale de la manette des gaz calculée précédemment, c'est-à-dire avec le dernier résultat obtenu par le calculateur d'interface. Si l'un des deux valeur de position de capteur est en accord avec cette position globale, on choisit pour la valeur de position de groupe du groupe de capteurs considéré la valeur de position de capteur en accord avec la position globale précédente.

Dans le cas contraire, le groupe est déclaré invalide et tous les capteurs sont déclarés en panne.

**3** La figure 7 illustre l'algorithme pour le calcul de la valeur de position globale de la manette des gaz 2, c'est-à-dire la valeur de position calculée en prenant en compte toutes les mesures effectuées par les capteurs correspondant à cette manette des gaz 2. Cette valeur de position globale est appelée TL. Cet algorithme commence à la case appelée START.

On retrouve alors une procédure similaire à celle mise en oeuvre pour la détermination de la valeur de position de groupe pour un groupe de capteurs. Au lieu de déterminer une valeur de position de groupe à partir de valeurs de position de capteur, on détermine une valeur de position globale correspondant à la position calculée de la manette des gaz considérée à partir des valeurs de position de groupe.

3.1 Si trois groupes de capteurs sont valides (case "3G ?" de l'organigramme de la figure 7), c'est-à-dire qu'une valeur de position de groupe a été déterminée pour ces trois groupes, des tests sont réalisés.

Si les groupes sont appelés G1, G2 et G3, et que les valeurs de position de groupe correspondantes sont respectivement g1, g2 et g3, des tests sont réalisés de même que précédemment pour les valeurs de position de capteur. On a ici :

Test 1 : | g1-g2 | < Tg
Test 2 : | g1-g3 | < Tg
Test 3 : | g2-g3 | < Tg

où Tg est une tolérance adaptée pour les groupes et qui est à calculer en fonction notamment des erreurs de mesure liées à l'architecture du système.

3.1.1 Si les trois tests sont positifs (case "3 T > 0"), c'est-à-dire que les valeurs absolues des différences calculées sont inférieures à la tolérance Tg, on détermine alors comme valeur de position globale pour la manette des gaz 2 correspondante la moyenne des valeurs de position groupe des trois groupes. TL3.3 est la valeur de la position globale de cette manette des gaz déterminée avec trois groupes valides et trois tests positifs :

$$TL3.3 = ( g1 + g2 + g3 ) / 3$$

3.1.2 Si seulement deux tests sont positifs (case "2 T > 0"), on détermine alors comme valeur de position globale pour la manette des gaz 2 correspondante la valeur de position de groupe du groupe en commun aux deux tests positifs. TL3.2 est la valeur de la position globale de cette manette des gaz déterminée avec trois groupes valides et deux tests positifs :

$$TL3.2 = gi, \text{ avec } i = 1 \text{ ou } 2 \text{ ou } 3$$

3.1.3 Si seulement un test est positif (case "1 T > 0"), la valeur de position globale pour la manette des gaz 2 correspondante est la moyenne des deux valeurs de position de groupe des groupes pour lesquels le test a été positif. TL3.1 est la valeur de position globale de cette manette des gaz déterminée avec trois mesures valides et un seul test positif :

$$TL3.1 = ( gi + gj ) / 2, \text{ avec } ( i, j ) = ( 1, 2 ), ( 1, 3 ) \text{ ou } ( 2, 3 )$$

3.1.4 Dans le cas où aucun test n'est positif (case 0 T > 0), la manette (ici appelée TL3.0) est considérée comme étant dans sa position de ralenti avant (en anglais : forward idle).

3.2 Lorsque deux groupes de capteurs sont valides (case "2G ?"), un seul test est réalisé :

Test 1 : I g1-g2 I < Tg, étant supposé ici que les deux groupes valides sont les groupes G1 et G2.

La tolérance Tg reste la même que pour les tests réalisés lorsque trois groupes de capteurs sont valides.

3.2.1 Si le test est positif, de manière analogue à ce qui a été décrit plus haut, la valeur de position globale pour la manette des gaz 2 est la moyenne des valeurs de position de groupe fournies par les deux groupes. On a ainsi :

$$TL2.1 = ( g1 + g2 ) / 2$$

3.2.2 Si le test est négatif, un autre test est réalisé. Il s'agit alors de déterminer si l'aéronef correspondant est au sol (AOG) ET si la dernière position de la manette des gaz correspond à une position d'inversion de poussée (REV). Si ce dernier test -portant sur les deux conditions- est positif, il est alors considéré que la position de la manette (ici appelée TL2.0.1) est la position d'inversion de poussée au ralenti (en anglais : reverse idle). Par contre, si ce dernier test est négatif, la manette (ici appelée TL2.0.0) est considérée comme étant dans sa position de ralenti avant (en anglais : forward idle).

3.3 Lorsqu'un seul groupe de capteurs est valide (case "1 G ?"), la valeur de position de groupe de ce groupe de capteurs devient la valeur de position globale de la manette des gaz, soit donc TL = gi, avec i = 1 ou 2 ou 3.

3.4 Lorsqu'aucun groupe de capteurs n'est valide (case "0 G"), la valeur de position globale de la manette des gaz ne peut pas être déterminée et la valeur de position globale est considérée comme invalide.

La mise en oeuvre de l'architecture présentée plus haut permet un calcul fiable de la position d'une manette des gaz en utilisant par exemple la méthode de calcul décrite ci-dessus. Cette description est faite pour un aéronef bimoteur et en prévoyant trois groupes de capteurs par manette des gaz. L'homme du métier saura sans aucun mal adapter l'architecture présentée et la méthode de calcul proposée à une autre configuration, avec un nombre différent de moteurs et/ou des capteurs différents et/ou une répartition différente des capteurs. La description ci-dessus prévoit huit capteurs par manette mais la présente invention fonctionne également avec un nombre différent de capteurs. De préférence, le nombre de capteur sera supérieur à quatre -par manette-. De même, le nombre de groupes de capteurs peut être différent en prévoyant toutefois de préférence au moins trois groupes de capteurs. Le nombre de capteurs par groupe peut aussi être adapté et on peut ici n'avoir qu'un seul capteur dans un groupe.

L'architecture proposée ici permet d'apporter une réduction de masse sensible par rapport à l'architecture décrite au préambule et dans laquelle deux synchro-trigonomètres sont utilisés comme capteurs et reliés chacun par six fils à un calculateur de contrôle moteur. La masse des câbles concernés ici peut être divisée par 6 par rapport à l'état de la technique présenté, d'une part du fait de la diminution des fils reliant les capteurs concernés au calculateur de contrôle moteur et d'autre part du fait de la nature différente des fils utilisés.

Le fait d'utiliser des rhéostats à la place de synchro-trigonomètres permet également de limiter la masse du dispositif car un rhéostat est environ deux fois plus léger qu'un synchro-trigonomètre. En outre, un rhéostat présente l'avantage d'être moins onéreux qu'un synchro-trigonomètre.

Il est possible aussi d'utiliser d'autres types de capteurs de position de la manette des gaz, notamment en ce qui concerne les capteurs reliés à un calculateur de contrôle moteur. Il peut s'agir de tout type de capteur de mesure angulaire. Ces capteurs peuvent être des capteurs numériques connectés en deux, trois, quatre ou cinq fils et être de type codeur incrémental ou autre. On peut aussi avoir des capteurs analogiques connectés en deux, trois, quatre ou cinq fils de type potentiomètre ou autre, voire même trigonomètre.

L'acquisition par un calculateur de contrôle moteur d'un signal en provenance d'un rhéostat est réalisé par une simple mesure de courant continue qui est l'image directe de la position angulaire du capteur -rhéostat- alors que l'acquisition à partir d'un synchro-trigonomètre demande le traitement de deux tensions alternatives puis un traitement -calcul d'arctangente- pour obtenir une valeur de la position angulaire du capteur correspondant.

On remarque également que l'alimentation du rhéostat par le calculateur de contrôle moteur se fait par une simple tension continue alors qu'il faut générer une tension alternative avec une fréquence très stable pour un synchro-trigonomètre.

La logique de calcul de la position de la manette des gaz proposée permet d'avoir une panne simple commune aux deux capteurs connectés au calculateur de contrôle moteur sans dégrader le niveau de sécurité exigé pour le calcul de cette position, ce qui est un progrès par rapport au mode de réalisation de l'art antérieur présenté en référence à la figure 1.

La présente invention permet donc de simplifier l'architecture du dispositif de détermination de la position d'une manette des gaz d'un aéronef qui, par rapport aux dispositifs connus de l'art antérieur, est plus léger, utilise une technologie plus simple, est moins coûteux, est plus fiable et permet également de simplifier l'architecture mécanique de la manette des gaz concernée.

La présente invention ne se limite pas au mode de réalisation préféré décrit ci-dessus à titre d'exemple non limitatif et aux variantes évoquées. Elle concerne également toutes les variantes de réalisation à la portée de l'homme du métier dans le cadre des revendications ci-après.

**Revendications**

1. Dispositif pour la détermination de la position d'une manette des gaz dans un aéronef, comportant d'une part des capteurs de position reliés chacun à un calculateur dit calculateur de commande de vol primaire et d'autre part des capteurs de position reliés chacun à un calculateur dit calculateur de contrôle moteur,
   **caractérisé en ce que** les capteurs de position sont répartis en au moins trois groupes de capteurs, et **en ce que** le dispositif comporte au moins un calculateur, dit calculateur d'interface, présentant au moins une entrée pour recevoir des informations de mesure émises par les calculateurs reliés aux capteurs de position ainsi qu'au moins une sortie vers le calculateur de contrôle moteur.

2. Dispositif selon la revendication 1, **caractérisé en ce que** les capteurs de position sont répartis en des groupes de capteurs n'ayant pas de panne simple commune.

3. Dispositif selon l'une des revendications 1 ou 2, **caractérisé en ce que** les capteurs de position reliés à un calculateur de contrôle moteur sont choisis dans l'ensemble des capteurs contenant les rhéostats, les capteurs numériques de type codeur incrémental et les capteurs analogiques de type potentiomètre.

4. Dispositif selon l'une des revendications 1 à 3, **caractérisé en ce que** les capteurs de position reliés à un calculateur de commande de vol primaire sont des potentiomètres.

5. Dispositif selon l'une des revendications 1 à 4, **caractérisé en ce qu'**il comporte deux groupes de trois potentiomètres et un groupe de deux rhéostats, **en ce que** les potentiomètres sont chacun reliés à un calculateur de commande de vol primaire, et **en ce que** les rhéostats sont chacun reliés à un calculateur de contrôle moteur.

6. Dispositif selon l'une des revendications 1 à 5, **caractérisé en ce que** chaque calculateur relié à un capteur de position comporte au moins deux canaux, et **en ce qu'**à chaque canal d'un calculateur de commande de vol primaire et d'un calculateur de contrôle moteur dudit dispositif est associé un seul capteur de position, et inversement.

7. Procédé de détermination de la position d'une manette des gaz d'un aéronef selon lequel des capteurs de position mesurent la position angulaire de la manette des gaz, **caractérisé en ce qu'**il comporte les étapes suivantes :

   - acquisition des signaux en provenance des capteurs par plusieurs calculateurs distincts,
   - transmission par lesdits calculateurs sous forme numérique de valeurs de position, dites valeurs de position de capteurs, déterminées à partir des mesures effectuées par les capteurs de position, à au moins un calculateur, dit calculateur d'interface,
   - calcul par chaque calculateur d'interface d'une valeur de position de la manette des gaz, et
   - transmission de la valeur de position calculée par chaque calculateur d'interface à un calculateur de contrôle moteur correspondant.

8. Procédé de détermination selon la revendication 7, **caractérisé en ce que** le calcul par au moins un calculateur d'interface comporte les étapes suivantes :

- calcul d'une valeur de position, dite valeur de position de groupe, pour chaque groupe de capteurs à partir des valeurs de position de capteur correspondant à chaque capteur du groupe, puis
- calcul d'une valeur de position pour la manette des gaz en fonction des valeurs de position de groupes.

9. Procédé de détermination selon la revendication 8, **caractérisé en ce que** les calculs sont réalisés à partir de valeurs ou de résultats en accord avec d'autres valeurs ou résultats, c'est-à-dire avec des valeurs ou des résultats dont la distance relative est inférieure à un seuil.

10. Aéronef, **caractérisé en ce qu'**il comporte une manette des gaz et un dispositif pour la détermination de la position de ladite manette des gaz selon l'une des revendications 1 à 6.

## Claims

1. Device for determining the position of a throttle lever in an aircraft, comprising position sensors each linked to a computer referred to as primary flight control computer, and further comprising position sensors each linked to a computer referred to as engine control computer,
**characterized in that** the position sensors are distributed in at least three groups of sensors, and **in that** the device comprises at least one computer, referred to as interface computer, having at least one input for receiving measurement information items transmitted by the computers linked to the position sensors as well as at least one output directed to the engine control computer.

2. Device according to claim 1, **characterized in that** the position sensors are distributed in groups of sensors not having any simple failure in common.

3. Device according to one of claims 1 or 2, **characterized in that** the position sensors linked to an engine control computer are chosen from among sensors containing rheostats, incremental-coder type digital sensors and potentiometer type analog sensors.

4. Device according to one of claims 1 to 3, **characterized in that** the position sensors linked to a primary flight control computer are potentiometers.

5. Device according to one of claims 1 to 4, **characterized in that** it comprises two groups of three potentiometers and a group of two rheostats, **in that** the potentiometers each are linked to a primary flight control computer, and **in that** the rheostats are each linked to an engine control computer.

6. Device according to one of claims 1 to 5, **characterized in that** each computer linked to a position sensor comprises at least two channels, and **in that** each channel of a primary flight control computer and of an engine control computer of the said device is associated with a single position sensor, and vice versa.

7. Method for determining the position of a throttle lever of an aircraft according to which position sensors measure the angular position of the throttle lever, **characterized in that** it comprises the following steps:

- acquiring signals originating from the sensors by several separate computers,
- transmitting by the said computers, in digital form, position values, referred to as sensor position values, determined from measurements made by the position sensors, to at least one computer, referred to as interface computer,
- calculating, by each interface computer, a position value of the throttle lever, and
- transmitting the position value calculated by each interface computer to a corresponding engine control computer.

8. Method for determining according to claim 7, **characterized in that** the calculating by at least one interface computer comprises the following steps:

- calculating a position value, referred to as group position value, for each group of sensors from the sensor position values corresponding to each sensor of the group, then
- calculating a position value for the throttle lever according to the group position values.

**9.** Method for determining according to claim 8, **characterized in that** the calculations are performed from values or results in agreement with other values or results, that is to say with values or results the relative distance of which is less than a threshold.

**10.** Aircraft, **characterized in that** it comprises a throttle lever and a device for determining the position of the said throttle lever according to one of claims 1 to 6.

**Patentansprüche**

**1.** Vorrichtung zum Ermitteln der Stellung eines Gashebels in einem Luftfahrzeug, enthaltend einerseits Lagesensoren, die jeweils mit einem Rechner, Flug-Hauptsteuerungsrechner genannt, verbunden sind, und andererseits Lagesensoren, die jeweils mit einem Rechner, Motorkontrollrechner genannt, verbunden sind,
**dadurch gekennzeichnet, dass**
die Lagesensoren in zumindest drei Sensorgruppen aufgeteilt sind und dass die Vorrichtung zumindest einen Rechner, Schnittstellenrechner genannt, aufweist, der zumindest einen Eingang zum Empfangen von Messdaten, die von den mit den Lagesensoren verbundenen Rechnern ausgegeben werden, sowie zumindest einen Ausgang zum Motorkontrollrechner enthält.

**2.** Vorrichtung nach Anspruch 1,
**dadurch gekennzeichnet, dass**
die Lagesensoren in Gruppen von Sensoren ohne gemeinsamen Einzelfehler aufgeteilt sind.

**3.** Vorrichtung nach einem der Ansprüche 1 oder 2,
**dadurch gekennzeichnet, dass**
die mit einem Motorkontrollrechner verbundenen Lagesensoren aus der Gesamtheit von Sensoren mit Rheostaten, digitalen Sensoren vom Inkrementalgebertyp und analogen Sensoren vom Potentiometertyp ausgewählt sind.

**4.** Vorrichtung nach einem der Ansprüche 1 bis 3,
**dadurch gekennzeichnet, dass**
die mit einem Flug-Hauptsteuerungsrechner verbundenen Lagesensoren Potentiometer sind.

**5.** Vorrichtung nach einem der Ansprüche 1 bis 4,
**dadurch gekennzeichnet, dass**
sie zwei Gruppen von drei Potentiometern und eine Gruppe von zwei Rheostaten aufweist, dass die Potentiometer jeweils mit einem Flug-Hauptsteuerungsrechner verbunden sind und dass die Rheostaten jeweils mit einem Motorkontrollrechner verbunden sind.

**6.** Vorrichtung nach einem der Ansprüche 1 bis 5,
**dadurch gekennzeichnet, dass**
jeder mit einem Lagesensor verbundene Rechner zumindest zwei Kanäle aufweist und dass jedem Kanal eines Flug-Hauptsteuerungsrechners und eines Motorkontrollrechners der Vorrichtung ein einziger Lagesensor und umgekehrt zugeordnet ist.

**7.** Verfahren zum Ermitteln der Stellung eines Gashebels eines Luftfahrzeugs, bei dem Lagesensoren die Winkelstellung des Gashebels messen,
**dadurch gekennzeichnet, dass**
es die nachfolgenden Schritte umfasst:

- Erfassen der von den Sensoren stammenden Signale über mehrere verschiedene Rechner,
- Übertragen von Stellungswerten, Sensorstellungswerte genannt, über die Rechner in digitaler Form, welche Werte ausgehend von Messungen ermittelt werden, die über die Lagesensoren erfolgen, zu mindestens einem Rechner, dem sogenannten Schnittstellenrechner,
- Errechnen eines Stellungswertes für den Gashebel durch jeden Schnittstellenrechner, und

- Übertragen des von jedem Schnittstellenrechner errechneten Stellungswertes zu einem entsprechenden Motorkontrollrechner.

8. Ermittlungsverfahren nach Anspruch 7,
   **dadurch gekennzeichnet, dass**
   das Berechnen durch zumindest einen Schnittstellenrechner die nachfolgenden Schritte umfasst:

   - Errechnen eines Stellungswertes, Gruppenstellungswert genannt, für jede Gruppe von Sensoren, ausgehend von Sensorstellungswerten, die jedem Sensor der Gruppe entsprechen, dann
   - Errechnen eines Stellungswertes für den Gashebel in Abhängigkeit von den Gruppenstellungswerten.

9. Ermittlungsverfahren nach Anspruch 8,
   **dadurch gekennzeichnet, dass**
   die Berechnungen ausgehend von Werten bzw. Ergebnissen in Übereinstimmung mit weiteren Werten bzw. Ergebnissen erfolgen,

   d. h. mit Werten bzw. Ergebnissen, bei denen der relative Abstand geringer als ein Schwellenwert ist.

10. Luftfahrzeug,
    **dadurch gekennzeichnet, dass**
    es einen Gashebel und eine Vorrichtung zum Ermitteln der Stellung des Gashebels nach einem der Ansprüche 1 bis 6 aufweist.

ART ANTÉRIEUR
Fig. 1

Fig. 2

Fig. 3

Fig. 4

Fig. 5

Fig. 6

Fig. 7

**EP 2 296 971 B1**

**RÉFÉRENCES CITÉES DANS LA DESCRIPTION**

**Documents brevets cités dans la description**

- US 4567786 A